# EUROPEAN PATENT APPLICATION

(11) **EP 3 560 639 A1**
(43) Date of publication of application: **30.10.2019**
(21) Application number: 18169948.9
(22) Date of filing: 27.04.2018
(51) Int. Cl.: B23B 31/26

(54) **A CLAMPING DEVICE**

(71) Applicant: AB Sandvik Coromant, 811 81 Sandviken (SE)
(72) Inventor: MÄTLIK, Gunnar, SE-802 80 Gävle (SE)
(74) Representative: Sandvik

(57) **Abstract**

The invention relates to a clamping device for releasably holding a tool holder shank. The clamping device comprises a housing (13) and a drawbar (19) being mounted reciprocally movable inside a bore of the housing and which in a forward end comprises engagement means (23), which are adapted to go into engagement with an engagement formation at the end of the tool holder shank, and in a rear portion is formed with a drawbar aperture (29). The clamping device further comprises a clamping mechanism (16) extending through the drawbar aperture, adapted to impart an axial displacement of the drawbar to and fro in the direction of the longitudinal axis of the housing, wherein the clamping mechanism comprises a first and a second actuator (27, 28) and an actuator bolt (17) interconnecting the actuators, extending through the drawbar aperture and arranged such that a rotation of the actuator bolt causes the actuators to move synchroneosuly towards or apart from one another, imparting an axial movement of the drawbar.

## Description

The present invention relates to a clamping device for releasably holding a tool holder shank, comprising:
a housing having a forward end, a rear end and a bore intersecting the forward end and extending rearwardly there from for receiving the tool holder shank in a mounting portion at the forward end of the bore;
a drawbar being mounted reciprocally movable inside the bore and which in a forward end comprises engagement means, which are adapted to go into engagement with an engagement formation at the end of the tool holder shank, and in a rear portion is formed with a drawbar aperture extending through the drawbar in a transverse direction in relation to a longitudinal axis of the housing; and
a clamping mechanism extending through the drawbar aperture and being adapted to impart an axial displacement of the drawbar in the direction of the longitudinal axis of the housing.

### Background of the invention

Clamping devices as outlined above in the introductory part are well known and widely used within the manufacturing industry for holding different kinds of tools for machining of work pieces of various materials. The clamping device may optionally be carried on a rotatable spindle, for holding e.g. a drill or a milling tool, or be unrotatable for holding e.g. a lathe tool.

A commonly used clamping mechanism is a cam shaft comprising a cam formation, wherein the cam shaft is rotatably journaled in the housing and adapted to impart an axial displacement to the drawbar in relation to the housing by means of the cam formation when rotating the cam shaft.

One advantage with a clamping device of this kind is that it allows for a quick clamping of the tool, simply by rotating the cam shaft by about 100° to 200°, which has the effect that the tool will be drawn by a large force into the mounting bore of the housing and thereby be securely held by the clamping device. Also the releasing of the tool can be easily and rapidly performed by rotating the cam shaft in the reverse direction. Normally, the bore of the housing as well as the tool holder shank are made slightly conical such that they are tapering in an axial direction rearward from the tool. In this way the connection between the tool and the clamping device can be made totally free from any play which has the effect that the tool will be held in an exact position which allows for high precision machining by means of the tool.

However, one disadvantage with prior art clamping devices of this kind is that the drawbar is made with a comparatively large cross sectional dimension such that it cannot, with the desirable cross sectional measures of the tool holder shanks frequently being used, be inserted through the bore of the housing from its forward end. The reason why the drawbar has to be made with such a large cross sectional dimension is that the drawbar aperture has to accommodate a cam shaft having a cam formation of a sufficient size in order to provide the desired displacement of the cam shaft and the desired force reduction for the operator performing the rotation of the cam shaft during clamping and releasing. However, in order to ensure sufficient tensile strength of the drawbar to withstand the desirable forces by which the tool holder shank is drawn into the shank bore, the remaining leg portions of the drawbar surrounding the drawbar aperture must be made with a sufficient cross sectional dimension. An example of a prior art design of a clamping device will be described more in detail in connection with the hereinafter detailed description of the invention. Accordingly, in order to position the drawbar in place when assembling the clamping device, the drawbar has up to the present been inserted from the rear end of the clamping device or a shank bore sleeve has been mounted in the forward end of the clamping device after that the drawbar has been inserted into the housing from the forward end. One consequence of this is that the overall dimensions of the clamping device cannot be made as small and slim as desired. Another consequence is that the clamping device will comprise extra mounting details which will render the clamping device more expensive to manufacture, both in respect of material costs and costs for performing the assembling.

### Summary of the invention

It is an object of the invention to provide a clamping device by which the drawbar is insertable into the housing through the bore of the housing from its forward end. At least this object can be achieved by a clamping device according to claim 1.

Accordingly, the basis of the invention is the insight that the drawbar can be made with an overall cross sectional dimension which is so small such that it can be inserted through the housing bore from the forward end of the housing. This is accomplished in that instead of a cam shaft, as in prior art clamping devices, the clamping mechanism comprises a first and a second actuator interconnected by an actuator bolt. Each of the first and the second actuators is slidably received in, and extending at least partly through, a respective one of two housing holes as well as the drawbar aperture, and is formed with an at least partly threaded hole. The thread in the first actuator is a right-hand thread and in the second actuator a left-hand thread and the threaded holes extend in a direction perpendicular to the longitudinal axis of the housing. Each of the actuators are formed with at least one locking pressure applying surface and at least one releasing pressure applying surface. The actuator bolt comprises a right-hand thread in one portion and a left-hand thread in another portion. The drawbar comprises, on the inside of the drawbar aperture, at least two locking pressure receiving surfaces facing towards the forward end of the housing and at least two releasing pressure receiving surfaces facing towards the rear end of the housing. The right-hand thread of the actuator bolt is threaded into the right-hand threaded hole of the first actuator, and the left-hand thread of the actuator bolt is threaded into the left-hand threaded hole of the second actuator, such that the actuators are interconnected and mounted into the housing with each of the actuators at least partly extended into a respective one of the housing holes as well as into the drawbar aperture from the respective side of the same, such that when the actuator bolt is rotated in one direction the actuators will be moved synchronously towards each other and the locking pressure applying surfaces of each of the actuators will press against the locking pressure receiving surfaces inside the drawbar aperture such that the drawbar will be displaced towards the rear end of the housing into a locking position. When the actuator bolt is rotated in the opposite direction the actuators will be moved synchronously apart from one another and the releasing pressure applying surfaces of each of the actuators will press against the releasing pressure receiving surfaces inside the drawbar aperture such that the drawbar will be displaced towards the forward end of the housing into a releasing position.

With such arrangement, the clamping mechanism can be made compact. Hence, the drawbar aperture as well as the cross-sectional dimension of the drawbar can be made so small such that the drawbar is insertable through the mounting bore from the forward end of the clamping device.

Since the actuators are arranged to move synchronously towards or apart from one another upon rotation of the actuator bolt, and since the actuators can be designed with a similar geometry and arranged symmetrically with respect to the longitudinal axis of the clamping device, the clamping mechanism does not impart any rotational asymmetry to the clamping device. Hence, the clamping device is well balanced.

The mounting portion at the forward end of the bore may be conical, and may also have a non-circular cross section. The conical shape ensures a connection free from play in the radial as well as the axial direction, whereas the non-circular cross-section (e.g. with a "triangular" or polygonal shape) ensures an nonrotatable fixation of the mounting shank in relation to the mounting bore.

The locking pressure applying surfaces and/or the releasing pressure applying surfaces of the actuators of the clamping mechanism may be curved or flat or have any other suitable shape, or be composed of several sections having different shapes. A curved surface may be beneficial by providing increased strength of the clamping device and improved distribution of forces.

At least a part of each pressure applying surface and pressure receiving surface, or the extension of such surface, may form an acute angle to the longitudinal axis of the housing when viewed in a longitudinal section through the clamping device in a plane containing the longitudinal axis of the housing and a longitudinal axis of each of the housing holes. In other words, the pressure applying/receiving surfaces may be inclined with respect to both the longitudinal axis of the housing and a longitudinal axis of each of the housing holes. Pressure applying/receiving surfaces arranged in such way can be used to induce movement of the drawbar along the longitudinal axis of the housing since the pressure applied/received by these respective surfaces will have a component in the axial direction.

The acute angle of the locking pressure applying surfaces preferably corresponds to the acute angle of the locking pressure receiving surfaces, and the acute angle of the releasing pressure applying surfaces preferably corresponds to the acute angle of the releasing pressure receiving surfaces.

The most beneficial acute angle of each pressure applying/receiving surface may depend on the design of other features, such as, for example, the design of the drawbar and the threads (e.g. the pitch) on the actuator bolt and in the threaded holes of the actuators. Preferably, though, the acute angle is between 15° and 75°, and may for example be between 40° and 50°, such as approximately 45°. In any case, the acute angle should not be too small, e.g. at least above 7°, since the friction force between a pressure applying surface and the corresponding pressure receiving surface otherwise may limit the operability of the clamping device.

Each locking pressure applying surface of the actuators and each locking pressure receiving surface inside the drawbar aperture may be composed of at least a first and a second surface section forming different angles with respect to the longitudinal axis of the housing when viewed in a longitudinal section through the clamping device in a plane containing the longitudinal axis of the housing and a longitudinal axis of each of the housing holes. As a consequence, the rotation of the actuator bolt that is required for displacing the drawbar a certain distance can be adapted to the force required at different stages of the clamping. For example, the angles of the locking pressure/receiving surfaces can be chosen such that at the final stage of the clamping, when a great force is required for displacing the drawbar a short distance, an increased rotational movement of the actuator bolt is required to displace the drawbar. Hence, clamping is facilitated and the usability of the clamping device is increased.

A longitudinal axis of each of the housing holes may be directed perpendicular to the longitudinal axis of the housing. However, the longitudinal axis of each of the housing holes may also be directed in an acute angle to the longitudinal axis of the housing. In such embodiments, the pressure applying surfaces of the actuators as well as the pressure receiving surfaces inside the drawbar aperture may be located perpendicular to the longitudinal axis of the housing.

It is apparent that the invention can be varied and modified in many different ways within the scope of the claims. For example, in the hereinafter described and illustrated exemplary embodiment of the invention, the mounting bore of the clamping device is conically formed and has a somewhat "triangular" or polygonal shape in cross section for clamping a tool holder having a similarly shaped mounting shank. However, the mounting bore could also have a different shape for clamping other types of mounting shanks.

In the description and claims throughout this application the term "forward" is used to indicate a direction or position towards the outer opening of the mounting bore through which the tool holder shank is inserted during clamping. In analogy, the terms "rear" or "rearward" are used to indicate a direction or position away from the outer opening of the mounting bore.

Furthermore, as used herein, the expression "facing towards" a forward (or rear) end of the housing for defining the orientation of a surface, indicates that the surface is oriented such as to face towards the respective end at least to some degree. Thus, the expression does not only cover a configuration where the surface is perpendicular to the longitudinal axis of the housing, but also configurations wherein a normal to the surface extends at an acute angle of up to (but not including) 90° to the longitudinal axis of the housing.

### Brief description of the drawings

An embodiment of a prior art clamping device as well as an exemplary embodiment of a clamping device according to the invention, will hereinafter be described with reference to the accompanying drawings, in which:
- Fig 1-3: illustrate an embodiment of a prior art clamping device;
- Fig 4: is a perspective view of a clamping device according to the invention coupled to a tool holder;
- Fig 5: is an exploded perspective view according to Fig. 4;
- Fig 6: is an exploded perspective view from above of a clamping mechanism and a drawbar;
- Fig 7: is an exploded perspective view from beneath of the clamping mechanism and drawbar according to Fig. 6;
- Fig 8: is a perspective view of the housing of the clamping device;
- Fig 9: is a longitudinal section through the clamping device and the tool holder, along the longitudinal axis of the housing, in an initial, unlocked stage;
- Fig 10: is a longitudinal section through the clamping device and the tool holder, along the longitudinal axis of the housing, in an activated, locked stage;

### Detailed description of a prior art clamping device

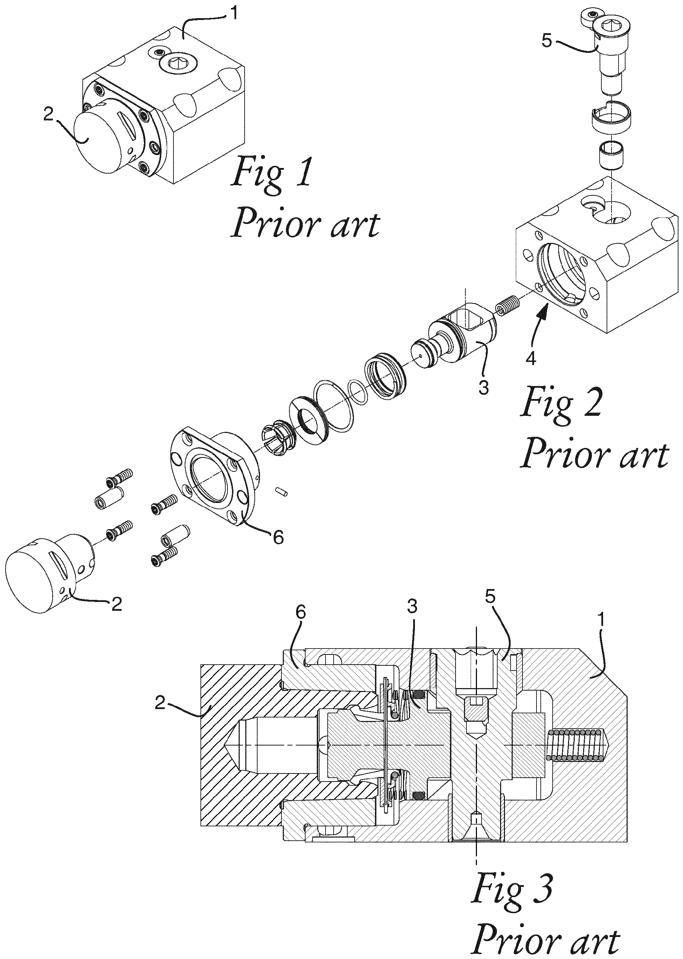

A prior art clamping device according to the preamble of claim 1 will now briefly be described by reference to Figs. 1-3. This prior art clamping device is of an unrotatable kind, which is adapted to hold e.g. a lathe tool. As evident from Fig. 1 an outer housing of the clamping device 1 is generally box-shaped and is shown connected to a schematically illustrated tool holder 2. Fig. 2 is an exploded perspective view of the clamping device and the tool holder showing all the separate components comprised in the clamping device. One of the components is a drawbar 3 being inserted into the housing in a bore 4. The drawbar 3 regulates the clamping mechanism, the function of which is not described here, between a locked stage, in which the tool holder is firmly coupled to the clamping mechanism, and a released stage in which the tool holder is released from the clamping device. The regulating of the clamping mechanism is performed by displacement of the drawbar 3 in the axial direction of the bore 4 in the housing. The displacement of the drawbar is in its turn performed by rotating a cam shaft 5, which extend through the housing and through an aperture in the drawbar, and which is provided with a cam formation which as desired can act on a rear surface of the aperture through the drawbar, which will displace the drawbar rearward, or on a forward surface of the aperture, which accordingly will displace the drawbar forward.

However, due to the cam formation comprising a locking cam surface as well as a releasing cam surface, the cam shaft will have a rather large cross sectional dimension and, accordingly, the aperture of the drawbar has to be formed with a correspondingly large cross sectional dimension in order to accommodate the cam shaft with its cam formation. As a result, the drawbar will be formed with rather large cross sectional dimensions since also the leg portions, which connect the forward and rear portions of the drawbar and are situated on a respective side of the drawbar aperture, must have a certain cross sectional dimension in order to withstand the forces that will occur. This has the effect that with the commonly used dimensions of the mounting shanks for tools and tool holders, the drawbar cannot be inserted from the forward end of the clamping device since the passage will be too small. In the herein disclosed prior art clamping device this problem has been solved by mounting a separate sleeve 6 within the bore 4 of the housing which will define the shank bore for the mounting shank of the tool holder. Accordingly, the drawbar is mounted into the housing prior to mounting the shank bore sleeve 6.

One problem with such a solution is that the costs for manufacturing the clamping device will increase. Another problem is that using a separate shank bore sleeve will introduce one further component having its own manufacturing tolerances, which will deteriorate the precision of the machining work performed by means of the tool.

### Detailed description of an embodiment of a clamping device according to the invention

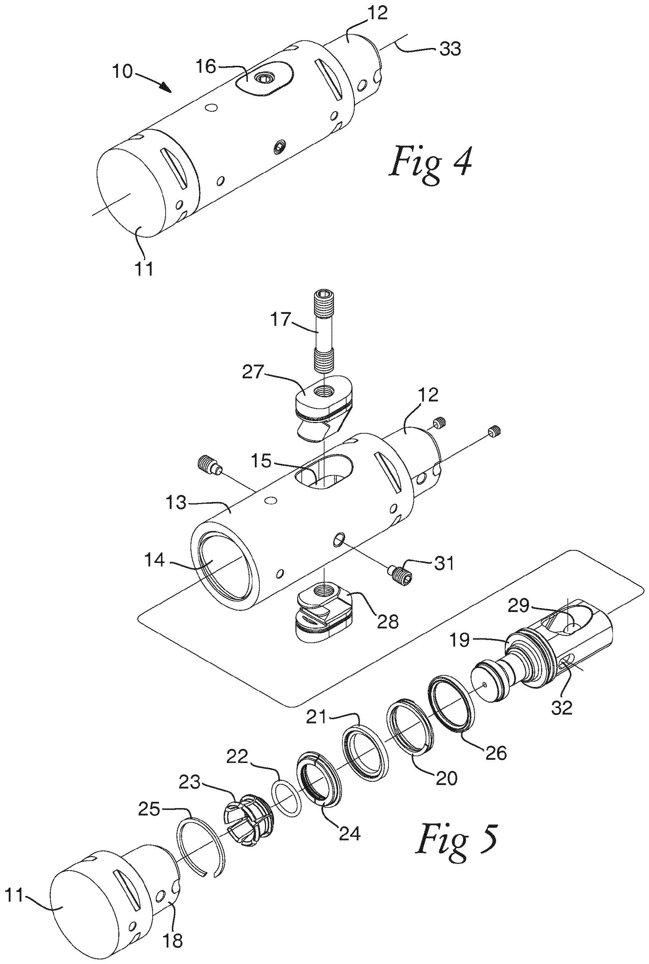

Reference is first made to Figs. 4 and 5 in which a clamping device 10 according to the invention and a schematic and cut-off tool holder 11 coupled to a forward end of the clamping device are illustrated in a perspective view. The tool holder is here schematically illustrated such that only its cut-off, rear end is shown but in practice some form of machining tool is connected to the tool holder, either integrated with the tool holder or as a separate connected part. In a rear end the clamping device is provided with a mounting shank 12, which is adapted to be connected to e.g. a not shown rotating spindle of a working machine or the like. The clamping device comprises a somewhat elongated, cylindrically shaped housing 13 having an inner bore 14. On its envelope surface the housing is provided with housing holes 15 (of which one is visible in the figure) for mounting of a clamping mechanism 16 into the housing. The clamping mechanism 16 comprises an actuator bolt 17, a first actuator 27 and a second actuator 28.

Fig. 5 is an exploded perspective view of the clamping device and tool holder 11 according to Fig. 4 showing the various components forming part of the clamping device. Like the clamping device, also the tool holder is provided with a mounting shank 18, which in the illustrated embodiment both are of a kind disclosed in US 5340248, comprising a conical shank having an axial bore and a somewhat "triangular" or polygonal, non-circular cross section, which is adapted to be drawn into a correspondingly shaped mounting bore 14. The conical shape ensures a connection free from play in the radial as well as the axial direction, whereas the "triangular" or polygonal shape ensures an nonrotatable fixation of the mounting shank in relation to the mounting bore. In order to draw the mounting shank 18 of the tool holder into the mounting bore of the clamping device, the latter is provided with a coupling mechanism comprising a drawbar 19, a sealing ring 26, a compression spring 20, a thrust ring 21, a retainer ring 24, an elastic O-ring 22, a plurality of engagement segments 23, and a stop ring 25 arranged within the bore 14 of the cylindrically formed housing 13. Each housing hole 15 is formed through the housing wall perpendicular to its centre axis 33 and in an assembled state the actuator bolt 17 of the clamping mechanism extends at least partly through the hole and through an aperture 29 in the drawbar. Stop screws 31 extends through holes in the housing and are arranged for engaging with axially elongated recesses 32 in the drawbar, for limiting the axial movement of the drawbar 19 within the inner bore 14.

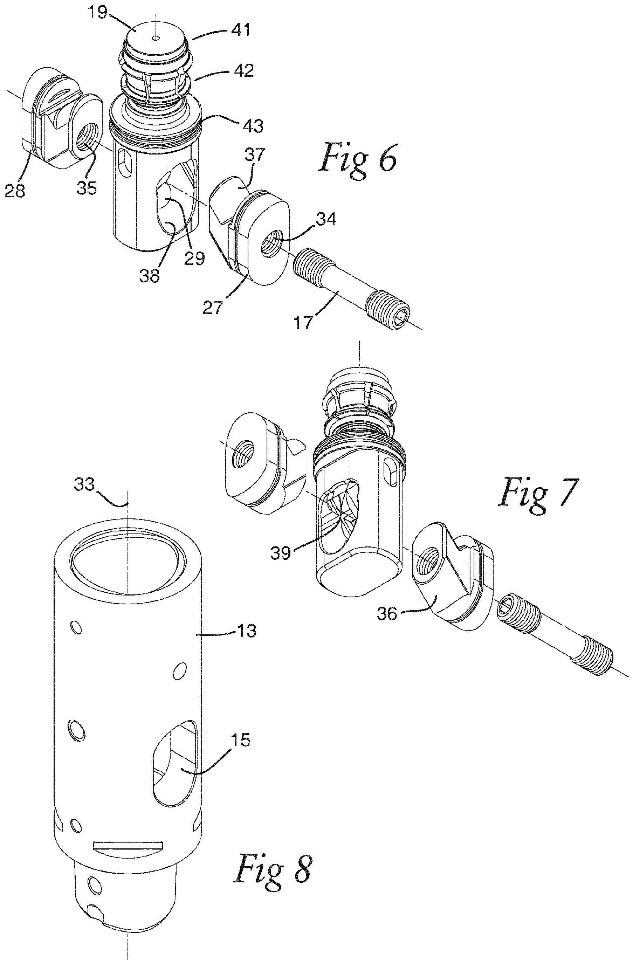

The clamping mechanism 16 and the drawbar 19 is illustrated more in detail in a perspective view from above and below according to Figs. 6 and 7, respectively. Fig. 8 is a perspective view of the clamping device housing.

The clamping mechanism 16 comprises a first actuator 27, a second actuator 28 and an actuator bolt 17 being threadedly connected to the actuators 27, 28 when the clamping mechanism is arranged within the drawbar aperture 29 and the housing holes 15. When arranged in the clamping device, a right-hand thread at a first end of the actuator bolt is threadedly engaged with a right-hand threaded hole 34 in the first actuator 27, and a left-hand thread at a second end of the actuator bolt is threadedly engaged with a left-hand threaded hole 35 in the second actuator 28. In this way, the actuators 27, 28 are interconnected and will move synchronously towards one another when the actuator bolt 17 is turned in one direction, and synchronously apart from one another when the actuator bolt 17 is turned in the opposite direction. When assembling the clamping mechanism, even if not apparent from figs. 5-7, the actuator bolt must obviously be inserted into the threaded holes 34, 35 from the side of each respective actuator 27, 28 that faces the longitudinal axis 33 of the housing. Hence, the actuator bolt may be inserted into the housing holes 15 and through the drawbar aperture 29 before being connected to the actuators 27, 28. When assembled, the actuators extend into a respective one of the housing holes 15 as well as into the drawbar aperture 29 from the respective side of the same. A longitudinal axis 51 of each of the housing holes 15 is directed perpendicular to the longitudinal axis 33 of the housing.

The part of each actuator that is arranged to extend into the drawbar aperture comprises at least one locking pressure applying surface 36 and at least one releasing pressure applying surface 37. These surfaces are arranged to contact corresponding pressure receiving surfaces 38, 39 on the inside of the drawbar aperture. The pressure applying surfaces 36, 37 of the actuators as well as the pressure receiving surfaces 38, 39 inside the drawbar aperture are inclined with respect to both the longitudinal axis 33 of the housing and the longitudinal axis 51 of each of the housing holes (which are arranged perpendicularly to the longitudinal axis of the housing). In other words, an acute angle is formed between the longitudinal axis 33 of the housing and each pressure applying surface or pressure receiving surface, or an extension thereof. The acute angle of each locking pressure applying surface 36 is the same as the acute angle of the corresponding locking pressure receiving surface 38, and the acute angle of each releasing pressure applying surface 37 is the same as the acute angle of the corresponding releasing pressure receiving surface 39.

Due to the configuration with inclined pressure applying/receiving surfaces, the locking pressure applying surfaces 36 of the actuators will press on the corresponding locking pressure receiving surfaces 38 in the drawbar when the actuators 27, 28 move synchronously towards one another when turning the actuator bolt 17 in a first direction. As a consequence, the drawbar 19, which is reciprocally movable in the axial direction within the bore 14 of the housing, will be displaced towards the rear end of the housing 13 into a locking position in which a tool holder shank 18 inserted into the bore of the clamping device will be clamped. If the actuator bolt 17 is turned in the other direction, the actuators 27, 28 will move apart from one another and the releasing pressure applying surfaces 37 of the actuators will press on the corresponding releasing pressure receiving surfaces 39 in the drawbar. As a consequence, the drawbar 19 will be displaced towards the front end of the housing 13 into a releasing position in which a tool holder shank 18 held in the clamping device can be removed.

In the illustrated embodiment, the acute angle which is formed between (the extension of) each pressure applying/receiving surface and the longitudinal axis 33 of the housing is approximately 45°.

As can be further seen from Figs. 6 and 7, the drawbar aperture 29 is formed at the rear part of the drawbar 19. In its forward end it is formed with a drawhead 41 which is connected to the body portion via a neck portion 42 around which the engagement segments 23 are arranged. Between the neck portion and the body portion the drawbar is also formed with a circular flange and a groove 43 for accommodating the sealing ring 26.

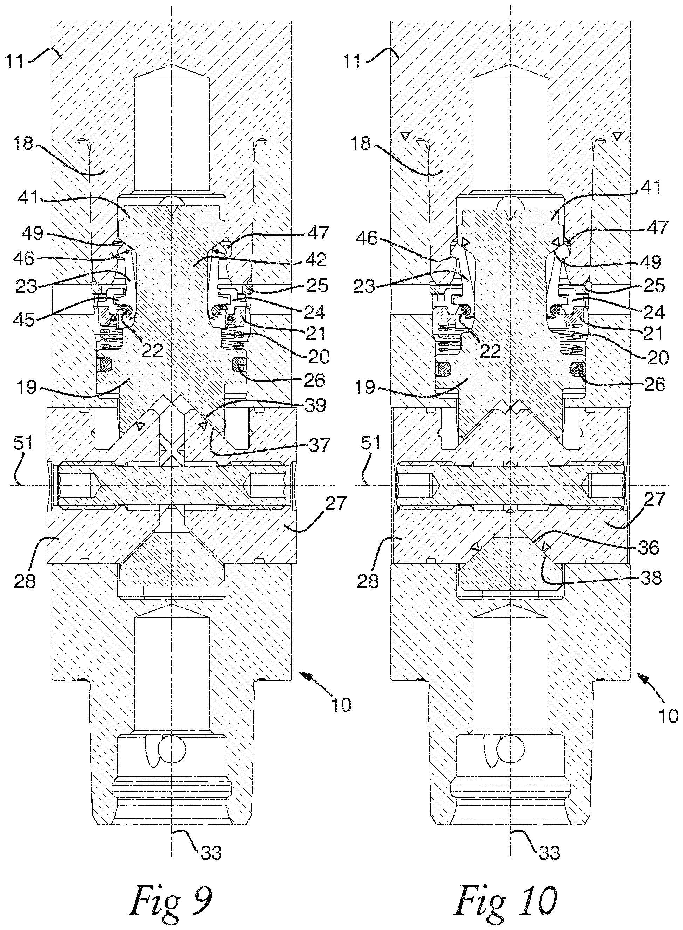

Reference is now made to Fig. 9 in which is illustrated an unlocked state, i.e. with the drawbar in the releasing position, when the tool holder inserted with its mounting shank 18 into the mounting bore of the clamping device is to be removed from the clamping device. Fig. 9 is a section along the longitudinal axis 33 of the assembled tool holder 11 and the clamping device 10 with all its components mounted in place. The section in fig. 9 is taken in a plane containing the longitudinal axis 33 of the housing and a longitudinal axis 51 of each of the housing holes 15.

The clamping device 10 in Fig. 9 is in an initial state in which the tool holder 11 is unlocked from the clamping device. As can be seen, the engagement segments 23 are mounted around a neck portion 42 of the drawbar in a space formed between the neck portion and an inner surface of an engagement bore within the mounting shank 18 of the tool holder. The engagement segments 23 are held in place by means of an outward extending flange portion 45 of each engagement segment being in engagement with an inner groove inside the retainer ring 24, and the elastic o-ring 22 is positioned in an outward facing groove formation in the rear end of the engagement segments. The forward ends of the engagement segments are formed with outward directed engagement flanges 46, which are adapted to go into engagement with an inner engagement groove 47 inside the engagement bore of the tool holder but are in this initial state out of engagement with the engagement groove. Moreover, the compression spring 20 is mounted between a flange of the drawbar and the thrust ring 21 and forces it as well as the retainer ring 24 and the engagement segments 23 in the forward direction against the stop ring 25. To reach this unlocked state, the actuator bolt 17 is rotated in the direction which affects the actuators to move synchroneously apart from one another such that the releasing pressure applying surfaces 37 of the actuators press on the corresponding releasing pressure receiving surfaces 39 in the drawbar, such that the drawbar is displaced in a forward direction.

Reference is now made to the Fig. 10 which is similar to the Fig. 9. However, here the clamping device is in a locked or clamped state in which the mounting shank 18 is coupled to the clamping device by means of the coupling mechanism and drawn by means of the drawbar 19 and the clamping mechanism 16 with a large force into firm engagement within the mounting bore of the clamping device.

This is accomplished by turning the actuator bolt in the direction which affects the actuators to move synchroneously towards one another such that the locking pressure applying surfaces 36 of the actuators press on the corresponding locking pressure receiving surfaces 38 in the drawbar, such that the drawbar is displaced in a rearward direction. As can be seen from this figure, the thrust ring 21, the retainer ring 24 and the engagement segments 23 are still pushed forward toward the stop ring 25 by means of the compression spring 20, while the drawbar 19 is drawn rearward by means of the actuators 27, 28 as described above. This has the effect that the engagement segments 23 will be displaced outwards in relation to the drawhead 41 such that their forward ends will slide on a rearward facing bevelled surface 49 of the drawhead 41. In this way, the engagement flanges 46 on the forward ends of the engagement segments will be displaced outwards and go into engagement with the engagement groove 47 inside the engagement bore of the tool holder such that the tool holder shank 18 will be drawn by means of the drawbar 19 into firm bearing against the surfaces of the mounting bore 14 in the housing.

Figs. 9 and 10 are schematic illustrations for facilitating understanding of the invention and are not intended to precisely illustrate the exact location or characteristic of certain components, such as the exact axial location of the drawbar 19 and other components or the amount of compression of the spring 20, in the unlocked and locked state, respectively. Furthermore, a number of arrows are shown in figs. 9 and 10 indicating motion or forces acting on different parts of the clamping device. These arrows are for facilitating understanding of the invention and should not be taken as a detailed or complete specification of all forces acting during operation of the clamping device.

As best seen in figs. 9 and 10, the longitudinal axis 51 of each of the housing holes 15 is directed perpendicular to the longitudinal axis 33 of the housing, whereas the pressure applying surfaces 36, 37 of the actuators and the pressure receiving surfaces 38, 39 of the drawbar are inclined with respect both to the longitudinal axis 33 of the housing and to the longitudinal axis 15 of each of the housing holes. However, it would also be possible to arrange the housing holes non-perpendicularly to the longitudinal axis of the housing. In such embodiments, the inclination of the pressure applying/receiving surfaces with respect to the longitudinal axis 33 of the housing may be different. In fact, the pressure applying/receiving surfaces could even be arranged perpendicularly to the longitudinal axis of the housing since a movement of the actuators within such "tilted" housing holes would have a component in the direction of the longitudinal axis of the housing.

As best seen in figs. 6 and 7, the pressure applying surfaces 36, 37 are curved, and each actuator comprises only one locking pressure applying surface 36 and one releasing pressure applying surface 37. However, actuators with additional pressure applying surfaces, and drawbars with a corresponding number of pressure receiving surfaces, are also possible. As an example, a flat surface may be arranged centrally on one of the pressure applying surfaces, dividing the curved surface into two separate curved pressure applying surfaces. This would improve the force distribution and mitigate the negative effect of any radii impreciseness of the surfaces. The flat surface would also create a passage for lubricant between the actuator and the pressure receiving surface inside the drawbar aperture.

The pressure applying surfaces and the pressure receiving surfaces do not have to be curved but may have any suitable form, for example flat. As an example, each actuator may comprise one or more grooves with flat side walls, arranged at a transversally facing side of the actuator, i.e. in a plane substantially parallel to the longitudinal axis of the housing. Each such groove, if arranged non-perpendicularly to the longitudinal axis of the housing, will then include one locking pressure applying surface (the side of the groove facing towards the rear end of the housing) and one releasing pressure applying surfaces (the side of the groove facing towards the forward end of the housing). Multiple such grooves could be arranged on each actuator. On the inside of the drawbar aperture a corresponding number of matching protrusions are arranged at the same angle as the grooves on the actuators. Each such protrusion would then comprise a locking pressure receiving surface (the side of the protrusion in contact with the locking pressure applying surface of the corresponding groove) and a releasing pressure receiving surface (the side of the protrusion in contact with the releasing pressure applying surface of the groove). As an alternative, the grooves could be arranged within the drawbar aperture and the corresponding protrusions on the actuators.

In the embodiment according to figs. 4-10, each pressure applying surface 36, 37 and each pressure receiving surface 38, 39 consists of a continuous surface having constant inclination angle with respect to the longitudinal axis of the housing when viewed in a longitudinal section through the clamping device in a plane containing the longitudinal axis of the housing and the longitudinal axis of each of the housing holes, as best seen in figs. 9-10. However, in an alternative embodiment, a pressure applying surface, and the corresponding pressure receiving surface, may comprise at least two surface sections having different angles in relation to the longitudinal axis of the housing. For example, a pressure applying surface on an actuator may be divided into a proximal surface section located closer to the longitudinal axis of the housing and a distal surface section located farther away from the longitudinal axis of the housing when the clamping mechanism is arranged within the bore of the clamping device. A corresponding pressure receiving surface within the drawbar aperture may be divided in a similar way into a proximal surface section and a distal surface section. During an inward movement of an actuator, the proximal surface section of the pressure applying surface will first contact the distal surface section of the pressure receiving surface. When the actuator travels further towards the longitudinal axis of the housing, the distal surface section of the pressure applying surface will reach and contact the proximal surface section of the pressure receiving surface. The proximal surface section of the pressure applying surface preferably has the same angle to the longitudinal axis of the housing as the distal surface section of the pressure receiving surface, and the distal surface section of the pressure applying surface preferably has the same angle as the proximal surface section of the pressure receiving surface. For locking pressure applying/releasing surfaces, the former angle is preferably smaller than the latter angle, such that the axial movement of the drawbar corresponding to a certain rotation of the actuator bolt is greater during the initial inward movement of the actuator, when the proximal surface section of the pressure applying surface contacts the distal surface section of the pressure receiving surface, and smaller during the subsequent movement of the actuator, when the distal surface section of the pressure applying surface contacts the proximal surface section of the pressure receiving surface, which corresponds to the stage of the clamping when the force required for clamping the tool holder shank is greatest. For example, the acute angle formed between the proximal surface section of the pressure applying surface and the longitudinal axis of the housing may be below 45°, e.g. between 15° and 45°, and the acute angle formed between the distal surface section of the pressure applying surface and the longitudinal axis of the housing may be above 45°, e.g. between 45° and 75°.

## Claims

1. A clamping device (10) for releasably holding a tool holder shank (18) comprising:
a housing (13) having a forward end, a rear end and a bore (14) intersecting the forward end and extending rearwardly therefrom for receiving the tool holder shank in a mounting portion at the forward end of the bore;
a drawbar (19) being mounted reciprocally movable inside the bore and which in a forward end comprises engagement means (23), which are adapted to go into engagement with an engagement formation at the end of the tool holder shank, and in a rear portion is formed with a drawbar aperture (29) extending through the drawbar in a transverse direction in relation to a longitudinal axis (33) of the housing; and
a clamping mechanism (16) extending through the drawbar aperture and at least partly into two housing holes (15) in the housing on opposite sides of the drawbar aperture and being adapted to impart an axial displacement of the drawbar to and fro in the direction of the longitudinal axis of the housing,
**characterized in that**
the clamping mechanism comprising:
a first and a second actuator (27, 28), each being slidably received in and extending at least partly through a respective one of the housing holes (15) as well as the drawbar aperture (29) and which each is formed with an at least partly threaded hole (34, 35), wherein the thread in the first actuator (27) is a right-hand thread and in the second actuator (28) a left-hand thread, and wherein the threaded holes extend in a direction perpendicular to the longitudinal axis of the housing, each of the actuators being formed with at least one locking pressure applying surface (36) and at least one releasing pressure applying surface (37);
and an actuator bolt (17) which comprises a right-hand thread in one portion and a left-hand thread in another portion;
wherein the drawbar on the inside of the drawbar aperture comprises at least two locking pressure receiving surfaces (38) facing towards the forward end of the housing and at least two releasing pressure receiving surfaces (39) facing towards the rear end of the housing;
and wherein the right-hand thread of the actuator bolt is threaded into the right-hand threaded hole of the first actuator, and the left-hand thread of the actuator bolt is threaded into the left-hand threaded hole of the second actuator, such that the actuators are interconnected and mounted into the housing with each of the actuators at least partly extended into a respective one of the housing holes as well as into the drawbar aperture from the respective side of the same, such that when the actuator bolt is rotated in one direction the actuators will be moved synchronously towards each other and the locking pressure applying surfaces of each of the actuators will press against the locking pressure receiving surfaces inside the drawbar aperture such that the drawbar will be displaced towards the rear end of the housing into a locking position, whereas when the actuator bolt is rotated in the opposite direction the actuators will be moved synchronously apart from one another and the releasing pressure applying surfaces of each of the actuators will press against the releasing pressure receiving surfaces inside the drawbar aperture such that the drawbar will be displaced towards the forward end of the housing into a releasing position.

2. The clamping device according to claim 1, wherein the mounting portion at the forward end of the bore is conical.

3. The clamping device according to claim 2, wherein the mounting portion at the forward end of the bore has a non-circular cross section.

4. The clamping device according to any of the previous claims,
wherein the locking pressure applying surfaces and/or the releasing pressure applying surfaces of the actuators are curved.

5. The clamping device according to any of the previous claims, wherein at least a part of each pressure applying surface and pressure receiving surface, or the extension of such surface, forms an acute angle to the longitudinal axis of the housing when viewed in a longitudinal section through the clamping device in a plane containing the longitudinal axis of the housing and a longitudinal axis of each of the housing holes.

6. The clamping device according to claim 5, wherein the acute angle of the locking pressure applying surfaces corresponds to the acute angle of the locking pressure receiving surfaces, and the acute angle of the releasing pressure applying surfaces corresponds to the acute angle of the releasing pressure receiving surfaces.

7. The clamping device according to any of the claims 5 or 6, wherein the acute angle is between 15° and 75°.

8. The clamping device according to any of the claims 5-7, wherein the acute angle is between 40° and 50°.

9. The clamping device according to any of the claims 5-8, wherein each locking pressure applying surface of the actuators and each locking pressure receiving surface inside the drawbar aperture are composed of at least a first and a second surface section forming different angles with respect to the longitudinal axis of the housing when viewed in a longitudinal section through the clamping device in a plane containing the longitudinal axis of the housing and a longitudinal axis of each of the housing holes.

10. The clamping device according to any of the previous claims, wherein a longitudinal axis of each of the housing holes is directed perpendicular to the longitudinal axis of the housing.

11. The clamping device according to any of the claims 1-9, wherein a longitudinal axis of each of the housing holes is directed in an acute angle to the longitudinal axis of the housing.

12. The clamping device according to claim 11, wherein the pressure applying surfaces of the actuators as well as the pressure receiving surfaces inside the drawbar aperture are located perpendicular to the longitudinal axis of the housing.
